(19) **Europäisches Patentamt**

**European Patent Office**

**Office européen des brevets**

(11) **EP 0 687 499 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(51) Int Cl.$^7$: **B01J 23/00**, B01J 23/80, B01D 53/94, B01D 53/86

(21) Anmeldenummer: **95109196.6**

(22) Anmeldetag: **14.06.1995**

(54) **Verfahren zur katalytischen Reinigung von Abgasen**

Process for the catalytic purification of exhaust gases

Procédé pour la prification catalytique de gaz d'échappement

(84) Benannte Vertragsstaaten:
**BE DE FR GB IT**

(30) Priorität: **16.06.1994 DE 4420932**

(43) Veröffentlichungstag der Anmeldung:
**20.12.1995 Patentblatt 1995/51**

(73) Patentinhaber:
• **DaimlerChrysler AG**
**70567 Stuttgart (DE)**
• **BASF Aktiengesellschaft**
**67063 Ludwigshafen (DE)**

(72) Erfinder:
• **Hartweg, Martin, Dr.**
**D-89155 Erbach (DE)**
• **Heinau, Martina**
**D-89075 Ulm (DE)**
• **Seibold, Andrea**
**D-89134 Blaustein-Arnegg (DE)**
• **Walz, Leonhard, Dr.**
**D-89231 Neu-Ulm (DE)**
• **Fetzer, Thomas, Dr.**
**D-67346 Speyer (DE)**
• **Morsbach, Bernd**
**D-67069 Ludwigshafen (DE)**
• **Büchele, Wolfgang, Dr.**
**D-67063 Ludwigshafen (DE)**

(56) Entgegenhaltungen:
EP-A- 0 042 471    EP-A- 0 395 471
EP-A- 0 548 481    EP-A- 0 685 253
DE-A- 2 010 194    FR-A- 2 311 584

**Beschreibung**

Die Erfindung betrifft ein Verfahren gemäß dem Oberbegriff des Anspruchs 1 sowie eine Verwendung gemäß dem Oberbegriff des Anspruchs 9.

Aus der nicht vorveröffentlichten DE 43 01 470 A1 ist ein $CuAl_2O_4$-Spinell bekannt, das unter Zusatz von Zinn, Blei, einem Element der II. Haupt- oder Nebengruppe des Periodensystems der Element als Oxid oder Salz oder in elementarer Form und anschließendem Calzinieren zu einem Spinell vereinigt wird. Das derart vorbekannte Spinell wird zur Zersetzung von $N_2O$ eingesetzt. Die Verwendung dieses Katalysators hinsichtlich einer katalytischen Oxidation von $CO_2$ und NOx insbesondere bei Temperaturen von mehreren 100 °C ist nicht bekannt.

Aus Gründen des Umweltschutzes ist die Reinigung von Gasen, insbesondere von Abgasen, wie sie bspw. bei Verbrennungsmotoren und hier vor allem bei Diesel- oder Magermixmotoren anfallen, neben der Verringerung von CO u.a. deren Entstickung, also der Abbau von Stickoxiden (NOx) ein vordringliches Problem.

Aus der EP 042 471 B1 ist ein zur katalytischen Oxidation von Kohlenmonoxid (CO) zu Kohlendioxid ($CO_2$) verwandter Katalysator bekannt, der die Metalle Kupfer (Cu), Zink (Zn) und Aluminium (Al) als Metalloxide aufweist. Zumindest 60% des vorhandenen Cu ist an das Al-Oxid als Kupferoxid-Aluminiumoxid-Spinell gebunden. In den Freiräumen des porösen Spinells ist Zn-Oxid mit einem Gewichtsanteil zwischen 1% bis 20% angeordnet.

Von dem aus der EP 042 471 B1 vorbekannten Katalysator ist allerdings nur seine reinigende Wirkung bzgl. des CO's bekannt, die auf einer katalytischen Oxidation des CO's beruht. Ob der Katalysator gleichfalls zur Reinigung von NOx und/oder Kohlenwasserstoffen aufweisenden Gasen, wie sie insbesondere bei den obengenannten Brennkraftmaschinen und bspw. auch in Verbrennungskraftwerken und dgl. anfallen, geeignet ist, ist nicht bekannt.

Aus der EP-A-395471 ist ein Katalysator zur Herstellung von Methanol bzw. einfachen Alkoholen aus Kohlenmonoxid (CO), Kohlendioxid ($CO_2$) und Wasserstoff ($H_2$) bekannt. Bezüglich der Verringerung von $No_x$ ist der Entgegenhaltung nichts entnehmbar.

Aus der FR 23 11 584 (A) ist ein Katalysator für Abgase von Dieselmotoren bekannt, der zwischen 4 - 8 Gew.-% Oxide des Kobalds, 2 - 4 Gew.-% Kupferoxide aufweist, die auf einem Träger aus Aluminia imprägniert sind. Der Katalysator dient zur Reduktion von CO und Kohlenwasserstoffen in Abgasen, ist stabil gegen $SO_2$ und wandelt es auch nicht in $SO_3$ um. Hinsichtlich von Stickoxiden ist dieser Schrift nichts entnehmbar.

Die Aufgabe der Erfindung ist es, ein Verfahren zu entwickeln, mit dem bei einer möglichst guten Stabilität gegenüber den Bestandteilen von Abgasen eine gute Reinigungswirkung insbesondere bei NOx erreichbar ist.

Die Aufgabe wird bei einem zugrundegelegten Verfahren mit den kennzeichnenden Verfahrensschritte des Anspruchs 1 gelöst. Durch die Verwendung eines $Cu_AZn_CAl_DO_4$-Spinells als Katalysator ist der Katalysator gegenüber den Bestandteilen der Abgase wie bspw. $H_2O$, NOx, $CO_2$ und/oder $SO_2$ weitgehend stabil, wobei er auf Kohlenwasserstoffe oxidierend und auf das NOx katalytisch reduzierend wirkt. Die Reduktion von NOx findet in sauerstoffhaltigem Gas und in Anwesenheit von Reduktionsmitteln, wie z.B. eben genannten Kohlenwasserstoffen statt. Vorteilhafterweise liegen Kohlenwasserstoffe in Abgasen von Verbrennungsmotoren in genügender Konzentration vor. In günstigen Fällen können bei Temperaturen oberhalb 300 °C Reduktionsraten über 60 % erreicht werden.

Zweckmäßige Ausgestaltungen der Erfindung sind den Unteransprüchen entnehmbar. Im übrigen wird die Erfindung anhand eines Ausführungsbeispieles, dessen Messungen in den beiliegenden Figuren als Diagramm dargestellt sind, beschrieben. Dabei zeigt

Fig. 1    ein Diagramm einer NOx(NO)-Reduktion über der Temperatur bei einem ein $Cu_{0.5}Zn_{0.5}Al_2O_4$ aufweisenden Katalysator und

Fig. 2    ein Diagramm einer NOx(NO)-Reduktion über der Temperatur bei einem ein $Cu_{0.25}Co_{0.25}Zn_{0.5}Al_2O_4$ aufweisenden Katalysator.

Beispiel 1)

Als pulvriges Spinell wird ein Kupfer/Zink/Aluminium-Spinell der Zusammensetzung $Cu_{0.5}Zn_{0.5}Al_2O_4$ verwandt. Von dem Spinell werden 10 Gramm Pulver in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wird ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht. Hinter dem Reaktor wird die NO-Konzentration mit einem Gasdetektor gemessen, wobei vor der Detektion eventuell gebildetes $NO_2$ in einem Konverter zu dem Stickoxid NO reduziert wird. Simultan wird eine Oxidation von Kohlenwasserstoffen zu $CO_2$ durch Messung des $CO_2$-Gehaltes durch den Gasdetektor beobachtet.

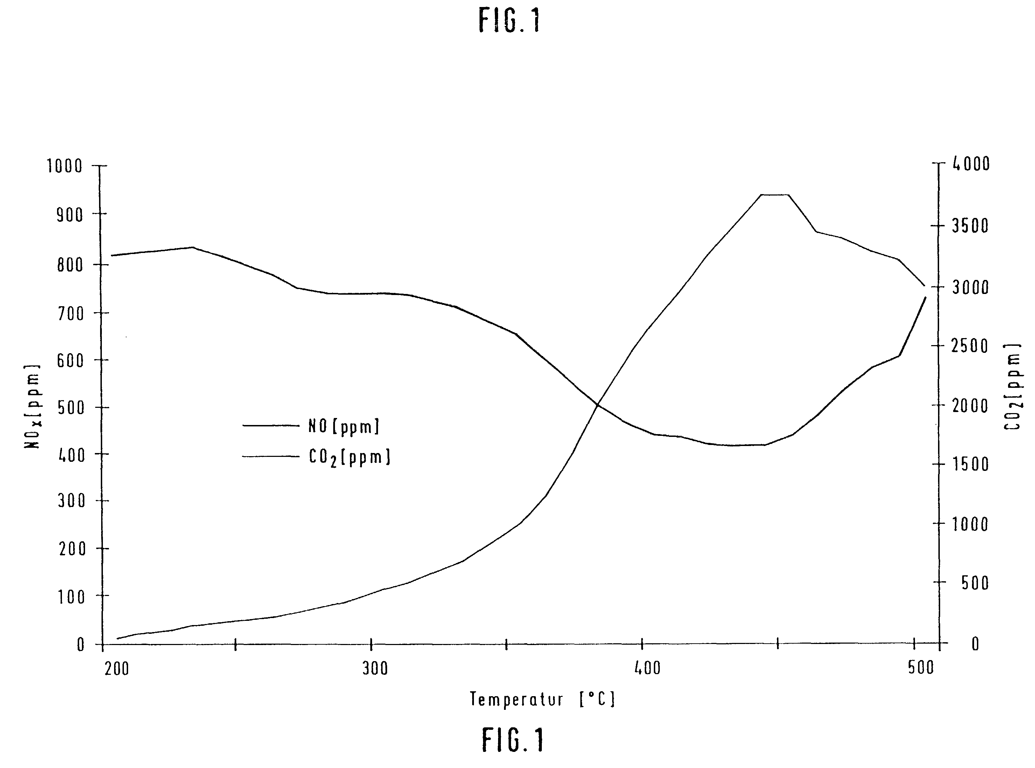

Das Ergebnis der Messung ist in Figur 1 in einem Diagramm dargestellt. Der Verlauf des NO- und des $CO_2$-Anteiles in ppm ist als Funktion der Temperatur aufgetragen, wobei die NOx-Konzentration und die

$CO_2$-Konzentration unterschiedlich gekennzeichnet sind. In dem Diagramm ist eine deutliche Abnahme der NOx(NO)-Konzentration mit zunehmender Temperatur erkennbar, die bei ca. 430 °C einen Tiefpunkt erreicht und anschließend wieder ansteigt. Für das $Cu_{0.5}Zn_{0.5}AL_2O_4$ wird ab ca. 200 °C eine drastische Abnahme der NOx-Konzentration beobachtet, wobei gleichzeitig die Kohlenwasserstoffe zu $CO_2$ umgesetzt werden, wie es sich an der Zunahme der $CO_2$-Konzentration zeigt. Das Temperaturfenster, in dem eine Reduktion des NOx's vorliegt, beträgt je nach Zusammensetzung des Materials zwischen 200 °C und 500 °C.

Günstigerweise liegt das angegebene Temperaturintervall bei etwa den Temperaturen, die in einem Abgasstrang eines Auspuffes einer Verbrennungskraftmaschine auftreten können.

Weitere Untersuchungen an diesem Katalysator ergaben eine hohe Beständigkeit gegenüber NOx, $H_2O$, $CO_2$ und $H_2O$.

Beispiel 2 )

Als pulvriges Spinell wird ein Kupfer/Kobalt/ Zink/Aluminium-Spinell der Zusammensetzung $Cu_{0.25}Co_{0.25}Zn_{0.5}Al_2O_4$ verwandt. Zur Herstellung dieses Spinells wird, ausgehend von einem $Cu_{0.5}Zn_{0.5}Al_2O_4$-Spinell, das Kupfer des Spinells teilweise durch Co substituiert, bis im Spinell das Cu und das Co in etwa gleicher Menge vorliegt.

Von dem Spinell werden 10 Gramm Pulver in einen senkrecht angeordneten Quarzreaktor (Durchmesser 20 mm, Höhe ca. 500 mm) vorgelegt, bei dem zur Exposition der Probe in dessen Mitte eine gasdurchlässige Fritte angeordnet ist. Die Schütthöhe beträgt etwa 15 mm. Um den Quarzreaktor ist ein Ofen angeordnet, der den Reaktormittelteil auf einer Länge von ca. 100 mm beheizt, wobei Temperaturen bis zu 550 °C erreichbar sind.

Durch den Katalysator wird ein Gasgemisch mit einer Raumgeschwindigkeit von ca. 10000 pro Stunde hindurchgeleitet, das aus 1000 ppm NO, 1000 ppm Propen, 10% Sauerstoff und dem Rest Argon als Trägergas besteht.

Hinter dem Reaktor wird die NO-Konzentration mit einem Gasdetektor gemessen, wobei vor der Detektion eventuell gebildetes $NO_2$ in einem Konverter zu NO reduziert wird. Simultan wird eine Oxidation von Kohlenwasserstoffen zu $CO_2$ durch Messung des $CO_2$-Gehaltes durch den Gasdetektor beobachtet.

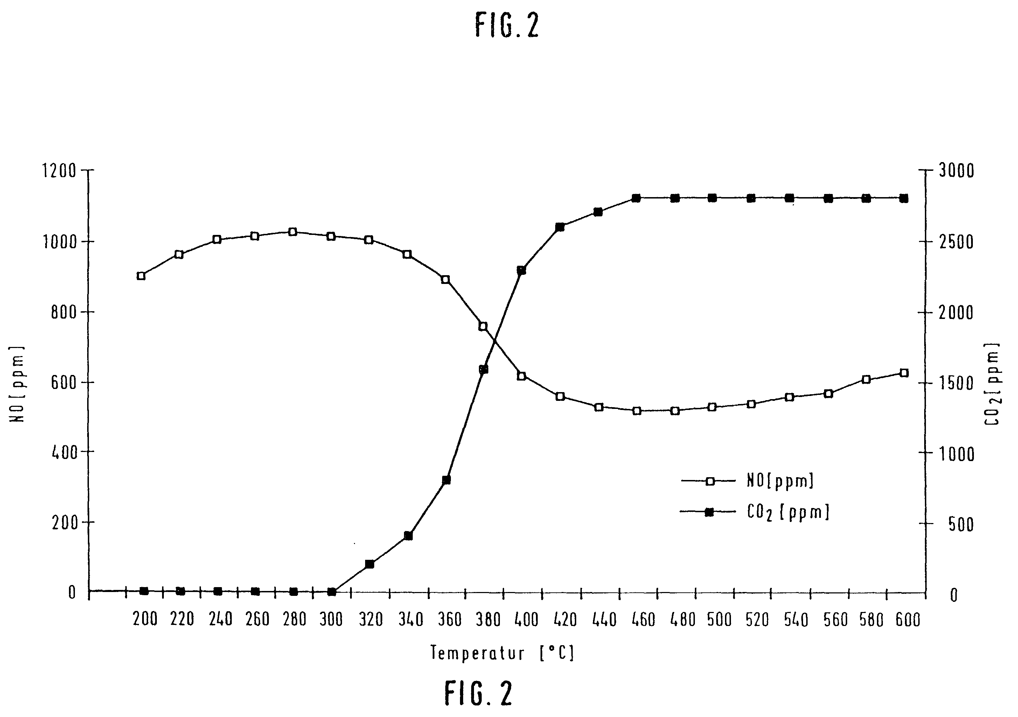

Das Ergebnis der Messung ist in Figur 2 in einem Diagramm dargestellt. Der Verlauf des NOx(NO) - und des $CO_2$-Anteils in ppm ist als Funktion der Temperatur aufgetragen, wobei die NOx-Konzentration und die $CO_2$-Konzentration unterschiedlich gezeichnet sind.

In dem Diagramm ist eine deutliche Abnahme der NOx(NO) - Konzentration mit zunehmender Temperatur erkennbar, die bei ca. 460 °C einen Tiefpunkt erreicht und anschließend wieder ansteigt.

Für das $Cu_{0.25}Co_{0.25}Zn_{0.5}Al_2O_4$ wird ab ca. 200 °C eine drastische Abnahme der NOx-Konzentration beobachtet, wobei gleichzeitig die Kohlenwasserstoffe zu $CO_2$ umgesetzt werden, wie es sich an der Zunahme der $CO_2$-Konzentration zeigt. Das Temperaturfenster, in dem eine Reduktion des NOx's vorliegt, beträgt je nach Zusammensetzung des Materials zwischen 200 °C und 500 °C.

Günstigerweise liegt das angegebene Temperaturintervall bei etwa den Temperaturen, die in einem Abgasstrang eines Auspuffes einer Verbrennungskraftmaschine auftreten können.

Weitere Untersuchungen an diesem Katalysator ergaben auch hier eine hohe Beständigkeit gegenüber NOx, $H_2O$, $CO_2$ und $H_2O$.

## Patentansprüche

1. Verfahren zur katalytischen Reduktion von NOx und zur Oxidation von Kohlenwasserstoffen in Abgasen, bei welchem Verfahren ein Spinell der chemischen Formel

$$Cu_A Co_B Zn_C Al_D O_4$$

als Katalysator gewählt wird, wobei gilt:

$$A + B + C + D = 3$$

und

$$A > 0,\ B \geq 0,\ C > 0\ und\ D > 0.$$

2. Verfahren nach Anspruch 1, **dadurch gekennzeichnet,** **daß** als Spinell ein Spinell der chemischen Formel

$$Cu_{(1-C)} Zn_C Al_2 O_4$$

gewählt wird, wobei gilt: 0 < C < 1.

3. Verfahren nach Anspruch 1, **dadurch gekennzeichnet,** **daß** als Spinell ein Spinell der chemischen Formel

$$Cu_{0.5} Zn_{0.5} Al_2 O_4$$

gewählt wird.

4. Verfahren nach Anspruch 1, **dadurch gekennzeichnet,** **daß** als Spinell ein Spinell der chemischen Formel

$$Cu_ACo_BZn_CAl_DC_4$$

gewählt wird, wobei gilt:

$$A > 0, B > 0, C > 0 \text{ und } D > 0.$$

**5.** Verfahren nach Anspruch 1,
**dadurch gekennzeichnet,**
**daß** als Spinell ein Spinell der chemischen Formel

$$Cu_{[1-(B+C)]}Co_BZn_CAl_2O_4$$

gewählt wird, wobei gilt:

$$0 < (B+C) < 1 \text{ mit } B>0 \text{ und } C>0.$$

**6.** Verfahren nach Anspruch 1,
**dadurch gekennzeichnet,**
**daß** als Spinell ein Spinell der chemischen Formel

$$Cu_{(0.5-B)}Co_BZn_{0.5}Al_2O_4$$

gewählt wird, wobei gilt: $0 < (B+C) < 1$ mit $B>0$ und $C>0$.

**7.** Verfahren nach Anspruch 1,
**dadurch gekennzeichnet,**
**daß** als Spinell ein Spinell mit der chemischen Formel

$$Cu_{0.25}Co_{0.25}Zn_{0.5}Al_2O_4$$

gewählt wird.

**8.** Verfahren nach Anspruch 1,
**dadurch gekennzeichnet,**
**daß** das Spinell in körniger, insbesondere in pulvriger Form vorliegt.

**9.** Verwendung des Verfahrens nach Anspruch 1 zur katalytischen NOx-Reduktion in Abgasen von Verbrennungsmotoren, insbesondere von Diesel- oder Magermixmotoren.

**10.** Verwendung des Verfahrens nach Anspruch 1 zur katalytischen NOx-Reduktion in Abgasen von Verbrennungskraftwerken.

**11.** Verwendung des Verfahrens nach Anspruch 1 zur katalytischen NOx-Reduktion in sauerstoffhaltigem Gas und bei Anwesenheit eines Reduktionsmittels.

**Claims**

**1.** Method for the catalytic reduction of NOx and for the oxidation of hydrocarbons in exhaust gases, in which method a spinel of the chemical formula

$$Cu_ACo_BZn_CAl_DO_4$$

is selected as a catalyst, whereby the following applies:

$$A + B + C + D = 3$$

and

$$A > 0, B \geq 0, C > 0 \text{ and } D > 0.$$

**2.** Method according to claim 1,
**characterised in that**
a spinel of the chemical formula

$$Cu_{(1-C)}Zn_CAl_2O_4$$

is selected as a spinel, whereby the following applies: $0 < C < 1$.

**3.** Method according to claim 1
**characterised in that**
a spinel of the chemical formula

$$Cu_{0.5}Zn_{0.5}Al_2O_4$$

is selected as a spinel.

**4.** Method according to claim 1,
**characterised in that**
a spinel of the chemical formula

$$Cu_ACo_BZn_CAl_DO_4$$

is selected as a spinel, whereby the following applies:

$$A > 0, B > 0, C > 0 \text{ and } D > 0.$$

**5.** Method according to claim 1,
**characterised in that**
a spinel of the chemical formula

$$Cu_{[1-(B+C)]}Co_BZn_CAl_2O_4$$

is selected as a spinel, whereby the following applies: $0 < (B+C) < 1$ with $B>0$ and $C>0$.

6. Method according to claim 1, **characterised in that** a spinel of the chemical formula

$$Cu_{(0.5-B)}Co_BZn_{0.5}Al_2O_4$$

is selected as a spinel, whereby the following applies: $0 < (B+C) < 1$ with $B>0$ and $C>0$.

7. Method according to claim 1, **characterised in that** a spinel of the chemical formula

$$Cu_{0.25}Co_{0.5}Zn_{0.5}Al_2O_4$$

is selected as a spinel.

8. Method according to claim 1, **characterised in that** the spinel is available in granular, in particular powdery, form.

9. Application of the method according to claim 1 for the catalytic NOx reduction in exhaust gases of internal combustion engines, in particular diesel or lean mix engines.

10. Application of the method according to claim 1 for the catalytic NOx reduction in exhaust gases of fuel-burning power stations.

11. Application of the method according to claim 1 for the catalytic NOx reduction in oxygen-containing gas and in the presence of a reducing agent.

**Revendications**

1. Procédé pour la réduction catalytique de $NO_x$ et pour l'oxydation d'hydrocarbures dans les gaz résiduaires, dans lequel on choisit comme catalyseur, une spinelle de formule chimique :

$$Cu_ACo_BZn_CAl_DO_4$$

où

$$A + B + C + D = 3,$$

et

$$A > 0, B \geq 0, C > 0 \text{ et } D > 0.$$

2. Procédé selon la revendication 1, **caractérisé en ce que** l'on choisit comme spinelle, une spinelle de formule chimique :

$$Cu_{(1-C)}Zn_CAl_2O_4$$

où : $0 < C < 1$.

3. Procédé selon la revendication 1, **caractérisé en ce que** l'on choisit comme spinelle, une spinelle de formule chimique :

$$Cu_{0,5}Zn_{0,5}Al_2O_4$$

4. Procédé selon la revendication 1, **caractérisé en ce que** l'on choisit comme spinelle, une spinelle de formule chimique :

$$Cu_ACo_BZn_CAl_DO_4$$

où

$$A > 0, B > 0, C > 0 \text{ et } D > 0.$$

5. Procédé selon la revendication 1, **caractérisé en ce que** l'on choisit comme spinelle, une spinelle de formule chimique :

$$Cu_{[1-(B-C)]}Co_BZn_CAl_2O_4$$

où : $0 < (B+C) < 1$, avec $B > 0$ et $C > 0$.

6. Procédé selon la revendication 1, **caractérisé en ce que** l'on choisit comme spinelle, une spinelle de formule chimique :

$$Cu_{(0,5-B)}Co_BZn_{0,5}Al_2O_4$$

où : $0 < (B+C) < 1$, avec $B > 0$ et $C > 0$.

7. Procédé selon la revendication 1, **caractérisé en ce que** l'on choisit comme spinelle, une spinelle de formule chimique :

$$Cu_{0,25}Co_{0,25}Zn_{0,5}Al_2O_4$$

8. Procédé selon la revendication 1, **caractérisé en ce que** la spinelle est présente sous forme granulaire, en particulier pulvérulente.

9. Utilisation du procédé selon la revendication 1, pour la réduction catalytique de $NO_x$ dans des gaz résiduaires de moteurs à combustion, en particulier de moteurs diesel ou mixtes maigres.

10. Utilisation du procédé selon la revendication 1, pour la réduction catalytique de $NO_x$ dans des gaz résiduaires d'usines génératrices à combustion.

11. Utilisation du procédé selon la revendication 1, pour la réduction catalytique de $NO_x$ dans des gaz oxygénés et en présence d'un agent de réduction.

# FIG.1

FIG.1

EP 0 687 499 B1

FIG.2

EP 0 687 499 B1

FIG. 2